# EUROPEAN PATENT SPECIFICATION

(11) **EP 1 972 707 B1**
(45) Date of publication and mention of the grant of the patent: **18.09.2013**
(21) Application number: 08004422.5
(22) Date of filing: 10.03.2008
(51) Int. Cl.: D04B 13/00, E04B 1/62

(54) **Articles including high modulus fibrous material**
Artikel mit Fasermaterial mit hohem Modulus
Articles comprenant un matériau fibreux à haut module

(30) Priority: 21.03.2007 US 688958
(43) Date of publication of application: 24.09.2008
(73) Proprietor: Walid Gamaleldin, Mohamed, Cairo (EG)
(72) Inventor: Walid Gamaleldin, Mohamed, Cairo (EG)
(74) Representative: Grünecker, Kinkeldey, Stockmair & Schwanhäusser

(56) References cited:
- WO-A-01/23125
- US-A- 5 176 952
- US-A1- 2003 087 973

## Description

### BACKGROUND OF THE INVENTION

The present invention relates to textile products useful as supporting substrates.

Synthetic nonwoven sheet materials have been used as components in a wide variety of products, including supporting substrates for roofing membranes, floor coverings, and the like. Many applications require a supporting substrate that exhibits good mechanical properties. In addition, in many applications, the nonwoven sheet materials can be exposed to varying temperature conditions during installation and subsequent use. Accordingly, such applications can require a substrate having good dimensional stability to minimize distortion of the product.

U.S. Patent No. 5,118,550 to Baravian et al. is directed to a substrate stated to exhibit good dimensional stability, even under conditions of production and subsequent treatments and use, such as bituminous impregnation. The substrate can include a synthetic nonwoven material in combination with high modulus threads arranged parallel to each other in the lengthwise direction.

U.S. Patent No. 5,856,243 to Geirhos et al. is directed to a composite including a synthetic fiber textile sheet reinforced with a hybrid yam. The hybrid yarn includes reinforcing fibers such as glass fibers and can be present in the composite as a warp thread or as a net construction. The nets are grids formed by mutually angled sets of parallel threads fixed to one another at their crossing points, with at least one set of parallel threads of the net including the hybrid yarns.

Such products can, however, suffer various drawbacks. Regularly distributing the fiberglass yarns in the machine direction can improve mechanical properties in the machine direction of the product. Improvements in mechanical properties in the machine direction, however, can come at the sacrifice of mechanical properties in the cross machine or transverse direction of the product. Further, many products, such as roofing membranes, are subject to stresses in all directions of the product, and not just in the machine direction. For example, a roof to which the membrane is attached can be subject to variances in temperatures, humidity and other environmental conditions. As a result, the roof can expand and contract in any and all directions. This in turn can result in failure of the roofing product. Even products including high modulus nets with intersecting longitudinal and transverse threads may not withstand the force of multidirectional stresses, thereby resulting in failure of this type of product as well.

### BRIEF SUMMARY OF THE INVENTION

The present invention is directed to composite sheet materials that include substantially randomly oriented high modulus fibrous material as a component thereof. The composite sheet materials of the present invention further include a nonwoven web of thermoplastic fibrous material.

Incorporating substantially randomly oriented high modulus fibrous material into the composite sheet materials of the invention can result in a substantially isotropic product, that is, a product exhibiting substantially similar machine direction and cross direction properties. The isotropic nature of the product can in turn result in improved dimensional stability as compared to a similar product including high modulus fibrous materials arranged parallel to one another. As a result, it is currently believed that the isotropic nature of the product can provide advantages for products subject to stresses in multiple directions. The resultant composite sheet materials can be particularly useful as a roofing membrane because the product can exhibit minimal distortion when subject to multidirectional stresses resulting from temperature variances. A composite sheet material according to the present invention comprises the features defined in claim 1.

Embodiments of the present invention are defined in the dependent claims.

### BRIEF DESCRIPTION OF THE DRAWINGS

Having thus described the invention in general terms, reference will now be made to the accompanying drawings, which are not necessarily drawn to scale, and wherein:

Figures 1A and 1B are cross sectional views of composite sheet materials including a substantially fluid impervious component in accordance with exemplary embodiments of the invention;

Figure 2 is a top perspective view of an exemplary layer of substantially randomly oriented high modulus fibrous material useful as a component in composite sheet materials of the invention;

Figure 3 is a top perspective view of another exemplary layer of substantially randomly oriented high modulus fibrous material useful as a component in composite sheet materials of the invention;

Figures 4A and 4B are cross sectional views of composite sheet materials including a nonwoven web of substantially continuous thermoplastic filaments in accordance with other exemplary embodiments of the invention;

Figures 5A and 5B are cross sectional views of composite sheet materials in accordance with other exemplary embodiments of the invention; and

Figures 6A and 6B are cross sectional views of composite sheet materials in accordance with other exemplary embodiments of the invention.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

As used in the specification, and in the appended claims, the singular forms "a", "an", and "the" include plural referents unless the context clearly dictates otherwise.

It will be understood that when an element such as a component, layer, substrate or the like is referred to as being "surface to surface," "on" or extending "onto" another element, it can be directly on or extend directly onto the other element or intervening elements may also be present. In contrast, when an element is referred to as being "directly surface to surface," "directly on" or extending "directly onto" another element, there are no intervening elements present. Similarly, it will be understood that when an element such as a component, layer, substrate or the like is referred to as being "attached" or "mounted" to another element, it can be directly attached to the other element or intervening elements may also be present. In contrast, when an element is referred to as being "directly attached" or "directly mounted" to another element, there are no intervening elements present.

It will be understood that relative terms, such as "lower" or "bottom" and "upper" or "top," may be used herein to describe one element's relationship to another element as illustrated in the Figures. Similarly, relative terms such as "underlying," "underneath," "below," and "beneath" may also be used to describe one element's relationship to another element as illustrated in the Figures. It will be understood that relative terms are intended to encompass different orientations of the articles in addition to the orientation depicted in the Figures. Furthermore, it will be understood that such terms can be used to describe the relative positions of element(s) to one another, and for example, the terms can refer to an element that is "beneath" or "underlying" another element, with or without other intervening elements therebetween.

Embodiments of the present invention are described herein with reference to various cross-sectional perspective illustrations that are schematic illustrations of idealized embodiments of the present invention. As such, variations from the shapes of the illustrations as a result, for example, of manufacturing techniques are to be expected. Thus, embodiments of the present invention should not be construed as limited to the particular shapes of components illustrated herein but are to include deviations in shapes that result, for example, from manufacturing and other variances. The composite sheet materials and their respective components illustrated in the figures are schematic in nature and their shapes are not intended to illustrate the precise shape of a component of a sheet material and are not intended to limit the scope of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

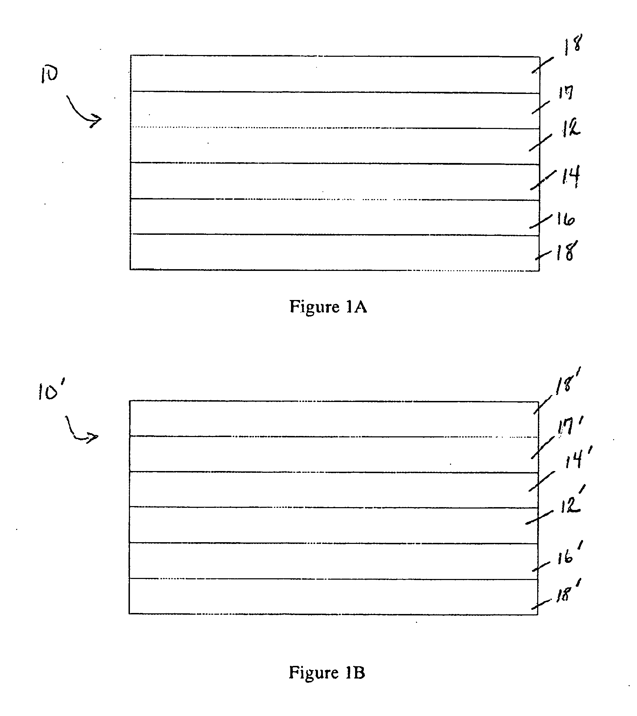

Figures 1A and 1B are schematic cross sectional views of exemplary embodiments of the composite sheet materials of the invention, designated generally as 10 and 10' respectively, in Figures 1A and 1B. The composite sheet materials 10 and 10' can include at least one, and optionally more than one, layer of substantially randomly oriented high modulus fibrous material, designated as 12 and 12' respectively, in Figures 1A and 1B. The exemplary composite sheet materials 10 and 10' can further include at least one, and optionally more than one, nonwoven web including thermoplastic fibrous materials, designated as 14 and 14' respectively, in Figures 1A and 1B. As also illustrated in Figures 1A and 1B, in this embodiment of the invention, the composite sheet material can further include at least one, and optionally more than one, substantially fluid impervious layer, designated as 16 and 16', respectively, in Figures 1A and 1B.

The components of the composite material of the invention can be arranged in various different configurations, and the present invention is not limited to the specific illustrated layer arrangements. As a non-limiting example, Figure 1A illustrates a composite sheet material 10 in which nonwoven web 14 including thermoplastic fibrous material can be disposed between substantially randomly oriented high modulus fibrous material 12 and substantially fluid impervious layer 16. In exemplary embodiments such as illustrated in Figure 1A, the composite sheet material 10 can optionally include at least one (or more) additional substantially fluid impervious layer(s), such as layer 17 in Figure 1A. In this embodiment, layers 16 and 17 can be arranged to sandwich substantially randomly oriented high modulus fibrous material 12 and nonwoven web 14. In addition, as discussed in more detail below, composite sheet material 10 can further optionally include one or more additional layer(s), for example, disposed between any combination of layers 12, 14, 16, and 17, and/or as additional layers 18,18 sandwiching the composite structure 10, as illustrated.

As noted herein, the present invention is not limited to the arrangement of components as illustrated in Figure 1A. As another non-limiting example, Figure 1B illustrates another exemplary embodiment of a composite sheet material 10' of the invention, in which substantially randomly oriented high modulus fibrous material 12' can be disposed between nonwoven web 14' including thermoplastic fibrous material and substantially fluid impervious layer 16'. In exemplary embodiments such as illustrated in Figure 1B, the composite sheet material 10' can optionally include at least one (or more) substantially fluid impervious layer(s), designated in Figure 1B as 17'. In this embodiment, layers 16' and 17' can be arranged so as to sandwich substantially randomly oriented high modulus fibrous material 12' and nonwoven web 14'. In addition, as discussed in more detail below, composite 10' can optionally include one or more additional layers, for example, disposed between any combination of layers 12', 14', 16', and 17' and/or as additional layers 18',18' sandwiching the composite structure 10', as illustrated.

As noted herein, composite sheet materials 10 and/or 10' can further one or more additional optional layers, such as layers 18 and/or 18' as illustrated in Figures 1A and 1B, respectively. As a non-limiting example, as illustrated, layer(s) 18 and/or 18' can be positioned along one, or both, outer surfaces of composite sheet material 10 and/or 10'. Alternatively, additional optional layers can be present in other combinations and other or additional locations within the composite sheet material of the invention.

As used herein, the term "fibrous material" includes fibrous articles such as but not limited to staple fibers, continuous filaments, yarns, tows, fiber bundles, meltblown fibers, spunbonded filaments, and the like, as well as combinations thereof. For ease of discussion, the term "fiber" as used herein can refer both to fibers of finite length, such as conventional staple fiber, as well as substantially continuous fibrous structures, such as continuous filaments, unless otherwise indicated. The term fiber as used herein can also include crimped, uncrimped, and textured fibers and filaments.

Fibers useful in the invention can be hollow or non-hollow fibers, and further can have a substantially round or circular cross-section or non-circular cross-section (for example, "shaped fibers" or fibers with shaped cross-sections, such as but not limited to oval fibers, rectangular fibers, multi-lobed or lobal fibers, delta cross-sections, and the like). The fibers can also be monocomponent fibers or multicomponent fibers, in which at least one, or more, components thereof includes a high modulus material and/or thermoplastic polymer as discussed in more detail herein. Multicomponent fibers can have a variety of fiber configurations as known in the art so long as the fiber components are arranged so as to form distinct cross-sectional segments along at least a portion of the length of the fiber. The multicomponent fibers can include substantially non-occluded segments, such as those present in pie/wedge fibers, side-by-side fibers, segmented fibers, and the like. The present invention is not limited to the use of non-occluded fiber constructions, and accordingly other fiber configurations can also be useful in accordance with the present invention, including those in which at least a portion of a one fiber segment is partially or fully occluded by an adjacent segment, such as found in islands in the sea fiber constructions, sheath/core fibers, and the like. Multicomponent fibers useful in the invention can also include splittable multicomponent fibers, i.e., multicomponent fibers capable of separating into microfilaments upon appropriate chemical and/or mechanical action. Alternatively, multicomponent fibers useful in the invention can be substantially nondissociable.

The substantially randomly oriented high modulus fibrous material of the composite sheet material of the invention can include any of the types of high modulus fibrous materials known in the art. Exemplary high modulus fibrous materials useful in the present invention include without limitation glass fibrous material, basalt fibrous material, aramid fibrous material, aromatic polyamide fibrous materials, high tenacity polyester fibrous materials, carbon fibrous material, metal fibrous material, and combinations thereof. The substantially randomly oriented high modulus fibrous material can have a basis weight ranging from about 5 to about 500 grams per square meter (gsm). The present invention is not so limited, however, and substantially randomly oriented high modulus fibrous materials having a basis weight outside of this range can also be useful in the invention.

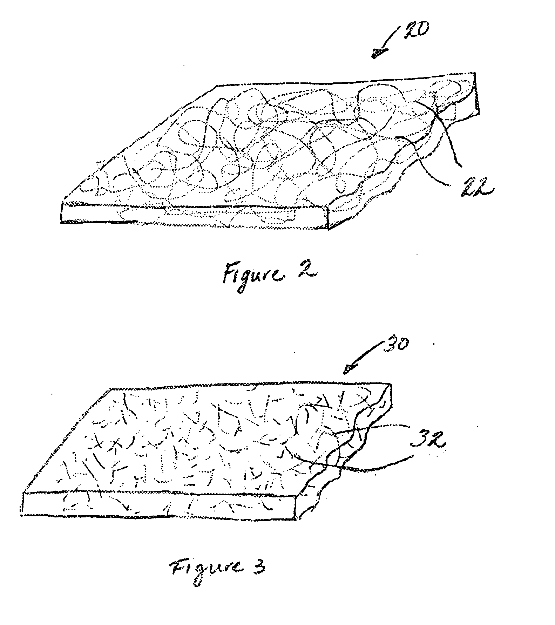

As used herein the term "substantially randomly oriented" refers to fibrous materials in any suitable form such as described herein, including staple fibers and continuous filaments, which are substantially randomly arranged. The substantially randomly oriented high modulus fibrous material of the invention is contrasted to prior high modulus fibrous material in which the high modulus fibrous material is in the form of, for example, substantially parallel strands and/or net constructions. Exemplary layers of substantially randomly oriented high modulus fibrous materials are illustrated in Figures 2 and 3. In particular, Figure 2 illustrates a top perspective view of a web 20 including a plurality of substantially randomly oriented high modulus continuous filaments 22, and Figure 3 illustrates a top perspective view of a web 30 including a plurality of substantially randomly oriented high modulus staple fibers 32. The skilled artisan will appreciate that the randomly oriented fibrous materials of the invention can accordingly include fibers, filaments, etc. extending in multiple directions, which are not aligned predominantly in the machine, transverse, or both, direction of the sheet material.

Although not wishing to be bound by any theory or explanation of the invention, it is currently believed that the use of substantially random orientated high modulus fibrous material can result in a substantially isotropic product (i.e., a product exhibiting substantially similar machine direction and cross direction properties). The isotropic nature of the product can in turn result in improved dimensional stability as compared to a similar product including high modulus fibrous materials arranged parallel to one another. It also currently believed that the isotropic nature of the product can provide advantages in use, particularly in applications subject to stresses in multiple directions, such as can result, for example, for products subject to temperature variances.

The thermoplastic fibrous material of the nonwoven web can include any of the types of polymers suitable for the formation of a particular article, i.e., can be any of the types of polymer resins known in the art capable of being formed into articles such as fibrous materials (including without limitation fibers, filaments, yarns, nonwoven articles, and the like, as discussed herein), and the like, as well as combinations thereof. Examples of polymers useful in the practice of the present invention include without limitation polyesters, including polyethylene terephthalate (PET), polyethylene naphthalate (PEN), polytrimethylene terephthalate (PTT), poly(1,4-cyclohexylene dimethylene terephthalate) (PCT), and aliphatic polyesters such as polylactic acid (PLA); polyolefins, including polypropylene, polyethylene, polybutene, and polymethyl pentene; polyamides, including nylon 6 and nylon 6,6; and the like, as well as co- and ter-polymers of these and other suitable polymers, and combinations thereof. Polyesters can be particularly advantageous in various embodiments of the invention, although the invention is not limited to use of polyesters. The nonwoven web can have a basis weight ranging from about 5 to about 500 grams per square meter (gsm). The present invention is not so limited, however, and nonwoven webs having a basis weight outside of this range can also be useful in the invention.

Substantially randomly oriented high modulus fibrous material and/or nonwoven webs including thermoplastic fibrous materials useful in the present invention (also referred to herein as "fibrous materials") can be made according to any of the known processes for making fibrous materials, including nonwoven processes that use mechanical, electrical, pneumatic, or hydrodynamic means for forming or assembling fibers into a web, for example carding, wetlaying, air laying, spunbonding, spunlacing, meltblowing, and the like. Suitable fiber randomizing techniques can optionally be employed to further increase the disorder of the fibrous materials, such as the substantially randomly oriented high modulus fibrous materials useful in the invention. For example, randomizing doffers and/or scrambling rollers can be used in a carding system to increase the disorder of the fibrous network.

In other embodiments of the invention, composite sheet material 10 and/or 10' can include substantially randomly oriented high modulus fibrous material 12 and/or 12' commingled with the thermoplastic fibrous material of nonwoven web 14 and/ or 14'. Fibrous materials including commingled high modulus fibrous materials and thermoplastic material can be produced using suitable processes. Exemplary commingling processes useful in the invention can include without limitation carding processes in which the respective fibrous materials (high modulus and thermoplastic) are mixed in a suitable mixing device prior to web formation, and/or carding processes in which high modulus fibers are sprayed, sprinkled or otherwise introduced into a web formed by a lower (inferior) crosslapper before combining with a web formed by an upper (superior) crosslapper.

The fibrous materials can be bonded using techniques as known in the art, such as but not limited to mechanical bonding, such as hydroentanglement and needle punching, adhesive bonding, thermal bonding, and the like, to form a coherent fibrous structure. An example of thermal bonding is through-air bonding, although other thermal bonding techniques, such as calendering, microwave or other RF treatments can be used.

Substantially fluid impervious layers 16, 17, 16', and/or 17' can be formed of any of the types of substantially fluid impervious materials as known in the art. Exemplary substantially fluid impervious materials useful in the present invention include without limitation bituminous materials, synthetic polymeric materials, and combinations thereof. Exemplary bituminous materials include for example polymer modified bituminous materials. Exemplary synthetic polymeric materials include polymeric films. In this embodiment of the invention, laminating or bonding of the substantially randomly oriented high modulus fibrous material and nonwoven web including thermoplastic fibrous material to the fluid impervious layer (such as a polymer film) can be achieved by adhesive lamination using a continuous or discontinuous layer of adhesive, thermal lamination, and the like. The substantially fluid impervious layer 16, 17, 16' and/or 17' can also be produced by direct extrusion of a film layer on the composite sheet material.

One or more optional additional layers, such as layers 18 and/or 18' illustrated in Figures 1A and 1B, can be selected from any suitable material, depending on the end use of the composite sheet material. Non-limiting examples of additional layers that can be useful in the composite sheet materials of the invention include particulate materials, woven materials, nonwoven materials, knit materials, films, and composites, such as film-coated nonwovens. In exemplary embodiments, the composite sheet material can include particulate materials, such as crushed stone (including gravel), sand, and the like, adhered to one or both outer surface(s) of the composite. In alternative embodiments of the invention, the composite sheet material can include at least one or more polymeric film(s) layers in combination with the other composite components. Combinations of such additional layers can also be useful in various embodiments of the invention, for example, a composite 10 and/or 10' including at least one layer 18 and/or 18' of particulate material and at least another layer 18 and/or 18' of a polymeric film. Again, as discussed herein, the type (particulate, film, etc.), number (one or more) and position (along one or both outer surfaces, positioned as an inner layer, etc.) of such optional layers can vary, and the present invention is not limited to the embodiments illustrated in Figures 1A and 1B.

Composite sheet material 10 and/or 10' can be formed by adhering the respective component of the composite, including substantially randomly oriented high modulus fibrous material 12 and/or 12' and nonwoven web 14 and/or 14', using any suitable bonding or lamination techniques, including thermal, mechanical, and/or adhesive bonding techniques as described herein, as well as combinations thereof. Binder fibers can also be incorporated into one or more of the respective layers of the composite, and the composite thermally treated to activate the binder fibers. Other bonding or laminating techniques useful in the invention can include extrusion techniques, such as extrusion coating, direct extrusion, and the like and combinations thereof.

As a non-limiting example, a suitable adhesive (or bonding agent) can be applied to one or both outer surfaces of any of the substantially randomly oriented high modulus fibrous material 12 and/or 12', nonwoven web 14 and/or 14', and/or substantially fluid impervious layer 16 and/or 16', individually or any combination thereto, as either a continuous or discontinuous coating, to form one or more adhesive layers. The adhesive can be applied continuously or intermittently by any accepted method including spraying, slot coating, meltblowing and the like. Suitable adhesives can be made from a variety of materials including but not limited to polyolefins, polyvinyl acetate polyamides, hydrocarbon resins, waxes, natural asphalts, styrenic rubbers, and blends thereof. After application of the adhesive, the various components or layers of the desired composite sheet material can then be arranged as desired and pressure applied as appropriate to secure the respective layers to one another, for example, by directing the respective layers into a surface-to-surface relationship and passing the resultant product through cooperating pressure rolls.

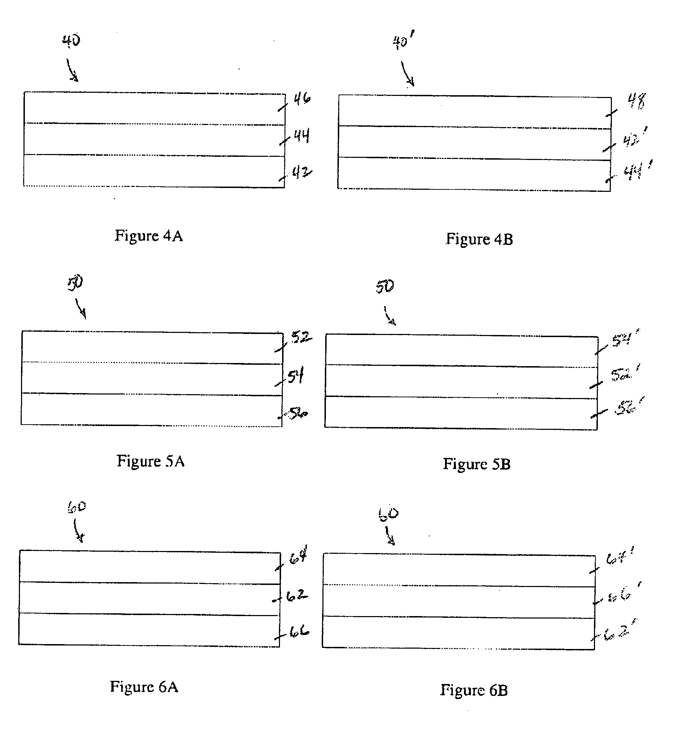

Figures 4A and 4B illustrate cross sectional views of other exemplary aspects of the composite sheet materials of the invention, designated as 40 and 40', respectively. The composite sheet materials 40 and 40' can include at least one, and optionally more than one, layer of substantially randomly oriented high modulus fibrous material, designated as 42 and 42' respectively, in Figures 4A and 4B. The exemplary composite sheet materials 40 and 40' can further include at least one, and optionally more than one, nonwoven web, designated as 44 and 44' respectively, in Figures 4A and 4B. In this aspect of the invention, nonwoven web 44 and/or 44' includes a plurality of substantially continuous thermoplastic filaments, such as spunbonded thermoplastic filaments.

As also illustrated in Figures 4A and 4B, in this aspect of the invention, the composite sheet material 40 and/or 40' can further include at least one, and optionally more than one, additional layer. Figure 4A illustrates an embodiment in accordance with this aspect of the invention in which the additional layer is a layer 46 of high modulus fibrous material positioned to sandwich nonwoven web 44 between layers 42 and 46. In this embodiment, layer 46 can include substantially randomly oriented high modulus fibrous material as described herein. Alternatively, layer 46 can include substantially oriented high modulus fibrous material, such as represented by a net material or a plurality of substantially parallel glass strands, so long as composite sheet material 40 includes at least one layer (such as layer 42) of substantially randomly oriented high modulus fibrous material. Figure 4B illustrates an alternative embodiment in accordance with this aspect of the invention in which the additional layer is a nonwoven web layer 48 of substantially continuous thermoplastic filaments positioned to sandwich layer 42' of substantially randomly oriented high modulus fibrous material between nonwoven webs 44' and 48. Composite sheet materials in accordance with this aspect of the invention can further include other optional layers, such as any of the types of composite components as described herein, including but not limited to particulate material layers, substantially fluid impervious layers, and the like, and combinations thereof.

Figures 5A and 5B are cross sectional views of other exemplary aspects of the composite sheet materials of the invention, designated as 50 and 50', respectively. The composite sheet materials 50 and 50' can include at least one layer of high modulus fibrous material, designated as 52 and 52' respectively, in Figures 5A and 5B. The exemplary composite sheet materials 50 and 50' can further include at least one, and optionally more than one, nonwoven web including thermoplastic fibrous materials, designated as 54 and 54' respectively, in Figures 5A and 5B. In this aspect of the invention nonwoven web 54 and/or 54' can be any of the types of nonwoven webs as described herein, including without limitation spunbonded webs, meltblown webs, carded webs, and the like and combinations thereof.

In this embodiment of the invention, composite sheet materials 50 and 50' further include at least one additional layer 56 and/or 56' of high modulus fibrous material. In this aspect of the invention, at least one of the layers of high modulus fibrous material (at least one of layer 52 and/or 56 of Figure 5A, or at least one of layer 52' and/or 56' of Figure 5B) includes substantially randomly oriented high modulus fibrous material as described herein. The other of the layer(s) of high modulus fibrous materials can also substantially randomly oriented high modulus fibrous material, or alternatively can include substantially oriented high modulus fibrous material, such as represented by a net material or a plurality of substantially parallel glass strands, so long as composite sheet material 50 and/or 50' includes at least one layer of substantially randomly oriented high modulus fibrous material.

Figure 5A illustrates an embodiment in accordance with this aspect of the invention in which layers 52 and 56 of high modulus fibrous material sandwich nonwoven web 54. Figure 5B illustrates an alternative embodiment in accordance with this aspect of the invention in which layer 56' of high modulus fibrous material and nonwoven web 54' sandwich layer 52' of high modulus fibrous material. Composite sheet materials in accordance with this aspect of the invention can further include other optional layers, such as any of the types of composite components as described herein, including but not limited to particulate material layers, substantially fluid impervious layers, and the like, and combinations thereof.

Figures 6A and 6B are cross sectional views of other exemplary aspects of the composite sheet materials of the invention, designated as 60 and 60', respectively. The composite sheet materials 60 and 60' can include at least one layer of substantially randomly oriented high modulus fibrous material, designated as 62 and 62' respectively, in Figures 6A and 6B. The exemplary composite sheet materials 60 and 60' can further include at least two nonwoven webs including thermoplastic fibrous materials, designated as 64 and 66 in Figure 6A and as 64' and 66' in Figure 6B. In this aspect of the invention the nonwoven webs can be any of the types of nonwoven webs as described herein, including without limitation spunbonded webs, meltblown webs, carded webs, and the like and combinations thereof.

Figure 6A illustrates an embodiment in accordance with this aspect of the invention in which nonwoven webs 64 and 66 sandwich layer 62 of substantially randomly oriented high modulus fibrous material. Figure 6B illustrates an alternative embodiment in accordance with this aspect of the invention in which nonwoven web 64' and layer 62' of substantially randomly oriented high modulus fibrous material sandwich nonwoven web 66'. Composite sheet materials in accordance with this aspect of the invention can further include other optional layers, such as any of the types of composite components as described herein, including but not limited to particulate material layers, substantially fluid impervious layers, and the like, and combinations thereof.

The composite sheet materials of the present invention can be useful in numerous products and applications. As non-limiting examples thereof, the composite sheet materials can be have applicability in membranes useful in construction, such as but not limited to membranes for roofing, foundations, basements, walls, and the like; geotextiles such as geomembranes; backings for flooring including polyvinyl chloride (PVC) sheet and tile flooring and carpeting; and the like. Geomembranes include, for example, substantially fluid impermeable membranes useful as cut-offs and liners, such as used in canals, ponds, hazardous, municipal, and agricultural waste facilities, and the like.

The present invention will be further illustrated by the following non-limiting

### examples.

Example 1

A nonwoven composite sheet material in accordance with an exemplary embodiment of the present invention can be prepared using a continuous multi-spinning beam process as follows. A nonwoven sheet of polyester fibrous materials can be produced using a continuous filament process such as spunbonding. Thereafter high modulus fibrous materials, such as glass staple fibers or glass cut yarns, are sprayed or otherwise applied onto a surface of the spunbonded polyester web. An additional layer of continuous filament polyester material, such as a second polyester spunbonded web, can thereafter be formed on the exposed surface of the glass fibrous web to form a sandwich structure including outer polyester spunbonded webs and an inner glass fibrous web. The webs can be bonded to form a coherent laminate structure using any suitable bonding technique, including chemical adhesion, thermal bonding, mechanical bonding (such as needling or hydroentanglement), and combinations thereof.

Example 2

A nonwoven composite sheet material in accordance with another exemplary embodiment of the present invention can be prepared as follows. A nonwoven sheet of polyester staple fibers can be produced using a carding process. High modulus fibrous materials, such as glass staple fibers or glass cut yarns, are sprayed or otherwise applied onto a surface of a lower (inferior) crosslapper and prior to this lower web being combined with a web of polyester staple fibers being formed by an upper (superior) crosslapper, to form a composite sheet material including outer layers of polyester staple fibers sandwiching an inner layer of glass staple fibers. The webs can be bonded to form a coherent laminate structure using any suitable bonding technique, including chemical adhesion, thermal bonding, mechanical bonding (such as needling or hydroentanglement), and combinations thereof.

Example 3

A nonwoven composite sheet material in accordance with yet another exemplary embodiment of the present invention can be prepared as follows. High modulus fibers, such as glass fibers, can be commingled with thermoplastic fibers, such as polyester fibers, in a mixing device and the commingled fibers thereafter laid on a web forming belt. The web of commingled polyester and glass fibers can be bonded to form a coherent laminate structure using any suitable bonding technique, including chemical adhesion, thermal bonding, mechanical bonding (such as needling or hydroentanglement), and combinations thereof.

Many modifications and other embodiments of the invention will come to mind to one skilled in the art to which this invention pertains having the benefit of the teachings presented in the foregoing descriptions. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

## Claims

1. A composite sheet material (10,10',40,40',50,50',60,60') comprising:
substantially randomly oriented high modulus fibrous material (12,12',42,42', 52,52',62,62')
wherein said substantially randomly oriented high modulus fibrous material (12,12',42,42',52,52',62,62') comprises fibrous material selected from glass fibrous material, basalt fibrous material, aramid fibrous material, aromatic polyamide fibrous material, high tenacity polyester fibrous materials, carbon fibrous material, metal fibrous material, and combinations thereof ;
a nonwoven web comprising thermoplastic fibrous material (14,14',44,44',54,54',64,64'); and
a substantially fluid impervious layer (16,16',17,17');
said substantially randomly oriented high modulus fibrous material (12,12',42,42',52,52',62,62'), said nonwoven web comprising thermoplastic fibrous material (14,14',44,44',54,54',64,64') and said substantially fluid impervious layer (16,16',17,17') being bonded to form a coherent laminate structure.

2. The composite sheet material (10,10',40,40',50,50',60,60') of Claim 1, wherein said thermoplastic fibrous material (12,12',42,42',52,52',62,62') comprises fibrous material selected from substantially continuous thermoplastic filaments, thermoplastic staple fibers, thermoplastic yarns, and combinations thereof.

3. The composite sheet material (10,10',40,40',50,50',60,60') of Claim 1, wherein said thermoplastic fibrous material (12,12',42,42',52,52',62,62') comprises fibrous material selected from polyester fibrous material, polyolefin fibrous material, polyamide fibrous material, and combinations thereof.

4. The composite sheet material (10,10',40,40',50,50',60,60') of Claim 3, wherein said thermoplastic fibrous material (12,12',42,42',52,52',62,62') comprises polyester fibrous material.

5. The composite sheet material (10,10',40,40',50,50',60,60') of Claim 1, wherein said substantially fluid impervious layer (16,16',17,17') comprises a material selected from bituminous material, synthetic polymeric material, and combinations thereof.

6. The composite sheet material (10,10',40,40',50,50',60,60') of Claim 1, further comprising particulate material.

7. The composite sheet material (10,10') of Claim 1, wherein said high modulus fibrous material (12,12') and said thermoplastic fibrous material (14,14') are comingled.

8. The composite sheet material (10,10',40,40',50,50',60,60') of Claim 1, further comprising a bonding agent for adhering said substantially randomly oriented high modulus fibrous material, said nonwoven web comprising thermoplastic fibrous material and said substantially fluid impervious layer.

9. The composite sheet material (10,10',40,40',50,50',60,60') of Claim 1, wherein said substantially randomly oriented high modulus fibrous material, said nonwoven web comprising thermoplastic fibrous material and said substantially fluid impervious layer are mechanically adhered to one another.

10. The composite sheet material (10,10',40,40',50,50',60,60') of claim 1, wherein said nonwoven web (14,14',44,44',54,54',64,64') comprising thermoplastic material comprises
a nonwoven web comprising substantially continuous thermoplastic filaments.

11. The composite sheet material (40,50,50') of claim 1, further comprising a second layer(46,56,56') comprising substantially randomly oriented high modulus fibrous material.

12. The composite sheet material (40',60,60') of claim 1, further comprising a second nonwoven web (48,66,66') comprising thermoplastic fibrous material.

## Patentansprüche

1. Ein bahnförmiges Verbundmaterial (10, 10', 40, 40', 50, 50', 60, 60'), umfassend:
einen im Wesentlichen zufällig orientierten Faserstoff (12, 12', 42, 42', 52, 52', 62, 62') mit hohem Elastizitätsmodul;
wobei der im Wesentlichen zufällig orientierte Faserstoff (12, 12', 42, 42', 52, 52', 62, 62') mit hohem Elastizitätsmodul einen Faserstoff umfasst, der aus einem Glasfaserstoff, einem Basaltfaserstoff, einem Aramidfaserstoff, einem Faserstoff aus einem aromatischen Polyamid, einem Faserstoff aus einem hochfesten Polyester, einem Karbonfaserstoff, einem Metallfaserstoff und Kombinationen davon ausgewählt ist;
einen Vliesstoff (14, 14', 44, 44', 54, 54', 64, 64'), der einen thermoplastischen Faserstoff umfasst; und
eine im Wesentlichen flüssigkeitsundurchlässige Schicht (16, 16', 17, 17');
wobei der im Wesentlichen zufällig orientierte Faserstoff (12, 12', 42, 42', 52, 52', 62, 62') mit hohem Elastizitätsmodul, der Vliesstoff (14, 14', 44, 44', 54, 54', 64, 64'), der einen thermoplastischen Faserstoff umfasst, und die im Wesentlichen flüssigkeitsundurchlässige Schicht (16, 16', 17, 17') miteinander so verbunden sind, dass sie eine zusammenhängende Laminatstruktur bilden.

2. Das bahnförmige Verbundmaterial (10, 10', 40, 40', 50, 50', 60, 60') gemäß Anspruch 1, wobei der thermoplastische Faserstoff (12, 12', 42, 42', 52, 52', 62, 62') einen Faserstoff umfasst, der aus im Wesentlichen endlosen thermoplastischen Fasern, thermoplastischen Stapelfasern, thermoplastischen Garnen und Kombinationen davon ausgewählt ist.

3. Das bahnförmige Verbundmaterial (10, 10', 40, 40', 50, 50', 60, 60') gemäß Anspruch 1, wobei der thermoplastische Faserstoff (12, 12', 42, 42', 52, 52', 62, 62') einen Faserstoff umfasst, der aus einem Polyesterfaserstoff, einem Polyolefinfaserstoff, einem Polyamidfaserstoff und Kombinationen davon ausgewählt ist.

4. Das bahnförmige Verbundmaterial (10, 10', 40, 40', 50, 50', 60, 60') gemäß Anspruch 3, wobei der thermoplastische Faserstoff (12, 12', 42, 42', 52, 52', 62, 62') einen Polyesterfaserstoff umfasst.

5. Das bahnförmige Verbundmaterial (10, 10', 40, 40', 50, 50', 60, 60') gemäß Anspruch 1, wobei die im Wesentlichen flüssigkeitsundurchlässige Schicht (16, 16', 17, 17') ein Material umfasst, das aus einem bituminösen Material , einem synthetischen Polymermaterial und Kombinationen davon ausgewählt ist.

6. Das bahnförmige Verbundmaterial (10, 10', 40, 40', 50, 50', 60, 60') gemäß Anspruch 1, zusätzlich umfassend ein Partikelmaterial.

7. Das bahnförmige Verbundmaterial (10, 10') gemäß Anspruch 1, wobei der Faserstoff (12, 12') mit hohem Elastizitätsmodul und der thermoplastische Faserstoff (14, 14') vermischt sind.

8. Das bahnförmige Verbundmaterial (10, 10', 40, 40', 50, 50', 60, 60') gemäß Anspruch 1, zusätzlich umfassend einen Klebstoff zum Verbinden des im Wesentlichen zufällig orientierten Faserstoffs mit hohem Elastizitätsmodul, des Vliesstoffs, der einen thermoplastischen Faserstoff umfasst und der im Wesentlichen flüssigkeitsundurchlässigen Schicht.

9. Das bahnförmige Verbundmaterial (10, 10', 40, 40', 50, 50', 60, 60') gemäß Anspruch 1, wobei der im Wesentlichen zufällig orientierte Faserstoff mit hohem Elastizitätsmodul, der Vliesstoff, der einen thermoplastischen Faserstoff umfasst, und die im Wesentlichen flüssigkeitsundurchlässige Schicht mechanisch miteinander verbunden sind.

10. Das bahnförmige Verbundmaterial (10, 10', 40, 40', 50, 50', 60, 60') gemäß Anspruch 1, wobei der Vliesstoff (14, 14', 44, 44', 54, 54', 64, 64'), der ein thermoplastisches Material umfasst, einen Vliesstoff umfasst, der im Wesentlichen endlose thermoplastische Fasern umfasst.

11. Das bahnförmige Verbundmaterial (40, 50, 50') gemäß Anspruch 1, zusätzlich umfassend eine zweite Schicht (46, 56, 56'), die einen im Wesentlichen zufällig orientierten Faserstoff mit hohem Elastizitätsmodul umfasst.

12. Das bahnförmige Verbundmaterial (40, 60, 60') gemäß Anspruch 1, zusätzlich umfassend einen zweiten Vliesstoff (48, 66, 66'), der einen thermoplastischen Faserstoff umfasst.

## Revendications

1. Matériau composite en feuilles (10, 10', 40, 40', 50, 50', 60, 60') comprenant :
un matériau fibreux à haut module orienté sensiblement de manière aléatoire (12, 12', 42, 42', 52, 52', 62, 62')
dans lequel ledit matériau fibreux à haut module orienté sensiblement de manière aléatoire (12, 12', 42, 42', 52, 52', 62, 62') comprend un matériau fibreux choisi parmi un matériau fibreux en verre, un matériau fibreux en basalte, un matériau fibreux en aramide, un matériau fibreux en polyamide aromatique, des matériaux fibreux en polyester à haute ténacité, un matériau fibreux en carbone, un matériau fibreux métallique et des combinaisons de ceux-ci ;
une toile non tissée comprenant un matériau fibreux thermoplastique (14, 14', 44, 44', 54, 54', 64, 64') ; et
une couche imperméable sensiblement fluide (16, 16', 17, 17') ;
ledit matériau fibreux à haut module orienté sensiblement de manière aléatoire (12, 12', 42, 42', 52, 52', 62, 62'), ledit matériau fibreux thermoplastique (14, 14', 44, 44', 54, 54', 64, 64') et ladite couche imperméable sensiblement fluide (16, 16', 17, 17') étant liés de manière à former une structure stratifiée cohérente.

2. Matériau composite en feuilles (10, 10', 40, 40', 50, 50', 60, 60') selon la revendication 1, dans lequel ledit matériau fibreux thermoplastique (12, 12', 42, 42', 52, 52', 62, 62') comprend un matériau fibreux choisi parmi des filaments thermoplastiques sensiblement continus, des fibres thermoplastiques découpées, des fils thermoplastiques et des combinaisons de ceux-ci.

3. Matériau composite en feuilles (10, 10', 40, 40', 50, 50', 60, 60') selon la revendication 1, dans lequel ledit matériau fibreux thermoplastique (12, 12', 42, 42', 52, 52', 62, 62') comprend un matériau fibreux choisi parmi un matériau fibreux en polyester, un matériau fibreux en polyoléfine, un matériau fibreux en polyamide et des combinaisons de ceux-ci.

4. Matériau composite en feuilles (10, 10', 40, 40', 50, 50', 60, 60') selon la revendication 3, dans lequel ledit matériau fibreux thermoplastique (12, 12', 42, 42', 52, 52', 62, 62') comprend un matériau fibreux en polyester.

5. Matériau composite en feuilles (10, 10', 40, 40', 50, 50', 60, 60') selon la revendication 1, dans lequel ladite couche imperméable sensiblement fluide (16, 16', 17, 17') comprend un matériau choisi parmi un matériau bitumineux, un matériau en polymère synthétique et des combinaisons de ceux-ci.

6. Matériau composite en feuilles (10, 10', 40, 40', 50, 50', 60, 60') selon la revendication 1, comprenant en outre un matériau particulaire.

7. Matériau composite en feuilles (10, 10') selon la revendication 1, dans lequel ledit matériau fibreux à haut module (12, 12') et ledit matériau fibreux thermoplastique (14, 14') sont combinés.

8. Matériau composite en feuilles (10, 10', 40, 40', 50, 50', 60, 60') selon la revendication 1, comprenant en outre un agent de liaison pour coller ledit matériau fibreux à haut module orienté sensiblement de manière aléatoire, ladite toile non tissée comprenant un matériau fibreux thermoplastique et ladite couche sensiblement imperméable aux fluides.

9. Matériau composite en feuilles (10, 10', 40, 40', 50, 50', 60, 60') selon la revendication 1, dans lequel ledit matériau fibreux à haut module orienté sensiblement de manière aléatoire, ladite toile non tissée comprenant un matériau fibreux thermoplastique et ladite couche sensiblement imperméable aux fluides sont collés mécaniquement les uns aux autres.

10. Matériau composite en feuilles (10, 10', 40, 40', 50, 50', 60, 60') selon la revendication 1, dans lequel ladite toile non tissée (14, 14', 44, 44', 54, 54', 64, 64') comprenant un matériau thermoplastique comprend
une toile non tissée comprenant des filaments thermoplastiques sensiblement continus.

11. Matériau composite en feuilles (40, 50, 50') selon la revendication 1, comprenant en outre une seconde couche (46, 56, 56') comprenant un matériau fibreux à haut module orienté sensiblement de manière aléatoire.

12. Matériau composite en feuilles (40', 60, 60') selon la revendication 1, comprenant en outre une seconde toile non tissée (48, 66, 66') comprenant un matériau fibreux thermoplastique.
